(19) Europäisches Patentamt
European Patent Office
Office européen des brevets

(11) **EP 2 112 773 B1**

(12) **EUROPEAN PATENT SPECIFICATION**

(45) Date of publication and mention
of the grant of the patent:
**15.06.2011 Bulletin 2011/24**

(51) Int Cl.:
**H04B 7/185** (2006.01)

(21) Application number: **08155008.9**

(22) Date of filing: **23.04.2008**

(54) **Method for communicating between several users via a satellite**

Verfahren zur Kommunikation zwischen mehreren Benutzern durch einen Satelliten

Procédé de communication entre plusieurs utilisateurs via un satellite.

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**28.10.2009 Bulletin 2009/44**

(73) Proprietor: **Deutsches Zentrum für Luft- und Raumfahrt e.V.**
**51147 Köln (DE)**

(72) Inventor: **Günther, Christoph, Prof. Dr.**
**82234 Wessling (DE)**

(74) Representative: **von Kreisler Selting Werner**
**Deichmannhaus am Dom**
**Bahnhofsvorplatz 1**
**50667 Köln (DE)**

(56) References cited:
**WO-A-96/28900     US-B1- 6 397 039**

• **S-Y R SHUO-YEN ROBERT LI ET AL: "Linear Network Coding" IEEE TRANSACTIONS ON INFORMATION THEORY, IEEE, US, vol. 49, no. 2, 1 February 2003 (2003-02-01), pages 1-11, XP011074683 ISSN: 0018-9448**
• **LI S-Y R ET AL: "On theory of linear network coding" 4 September 2005 (2005-09-04), INFORMATION THEORY, 2005. ISIT 2005. PROCEEDINGS. INTERNATIONAL SYMPOS IUM ON ADELAIDE, AUSTRALIA 4-9 SEPT. 2005, PISCATAWAY, NJ, USA, IEEE, PAGE(S) 273 - 277 , XP010846256 ISBN: 978-0-7803-9151-2 * abstract ***

**Description**

The present invention relates to a method for communication between several users via a satellite. By this invention a new scheme for network coding on satellite links is introduced. It allows to combine data streams coming from two users on a satellite at the signal level, i.e. without demodulating and decoding the information. The only requirement is that the modulations used are from the same class, like mPSK or QAM. This allows to constrain the additional delay due to on-board processing, and also to keep the satellite payload very flexible.

**1 Introduction**

Network coding has developed into a direction, which emphasizes the coding aspects in complex networks, see e.g. [1]. The combination of the signals in the individual nodes is performed by modulo 2 addition. Wu et al. [2] describe a transmission situation very similar to a satellite system. In this context the bits $b_1$ of the data streams received from two distinct users are combined:

$$b = b_1 \oplus b_2.$$

The sum b is then transmitted in the downlink. Each user can thus reconstruct the other's data by modulo 2 addition the received sum with his own, properly delayed data. This approach is completely general, but requires that the satellite estimates the bits transmitted by each user, which introduces delay and requires that the satellite can decode the data.

US-B-6 397 039 discloses a satellite communication system using multiple ground station RF power control in a single downlink beam.

Due to these inconveniences, it is more appropriate to consider combination schemes on the satellite, which act at the signal level. Such schemes are also more flexible with respect to future evolution of signal designs.

The present invention provides a method for data communicating between several users via a satellite as defined in claim 1.

According to one aspect of the invention, the group operation comprises a multiplication of the modulated and coded data streams.

According to another aspect of the invention, the combination signal includes a reference signal which allows estimating fades, frequency shifts and phase rotations.

According to still a further aspect of the invention, the group operation consists of a scaling operation followed by a modulo operation.

The invention will be described in more detail referring to the drawing in which

Fig. 1    shows the constellation points placed on two circles, wherein a scaling by $\kappa$ leads from the inner to the outer circle, and by modulo $\kappa^2$-1 from the outer to the inner, and

Fig. 2    shows three-level 8PSK with equal steps between the amplitudes (left) and optimized three-level 8PSK, with rotated and scaled sub- constellations (right).

**2 Modulation as a Group Operation**

Digital modulation schemes are typically built from discrete signal constellations in a two dimensional plane representing the in-phase and quadrature component of the signal. The bits are first encoded and then mapped onto the points of a particular, potentially time dependent, constellation. The signals are then shaped through digital and analog filtering. Prominent examples of constellations are m-ary Phase Shift Keying (m-PSK) and m-ary Quadrature Amplitude Keying (m-QAM).

So far no generic ways for combining signals from two constellations have been proposed. The modulo 2 addition, mentioned above, could be translated into a rule for combining 2PSK signals, i.e. QPSK signals, by using the homomorphism of the multiplicative group ($\{\pm 1\}, \cdot$) and the additive group ($\{0,1\}, \oplus$) in each component. Note, that the satellite must then be able to detect the orientation of the two constellations (at least modulo $\pi/2$).

The consideration of groups shows a path towards generalization. The points of a constellation can be seen as the images of one initial point under a group of transformation. We shall call this group the modulation group. Let $x_1$ be the mapping of the $i$-th symbol of the alphabet, then the following equation

$$x_l = g_l x_0,$$

defines the relation between the transformation by the group element $g_i$ and the signal element $x_i$. In this expression, $x_0$ is an arbitrary reference point. In the case of an 8PSK, the initial point could be $x_0 = 1$ and the group is the cyclic group of order 8. This group has a linear representation in the space of complex number $\mathbf{C}$ with a generator $e^{j\pi/4}$. The advantage of this description is that group elements can be composed, leading to another group element. Thus constellation points are transformed into constellation points. Let $g_{i_1}$ be an abstract group element associated with the data stream from a first user and let $g_{i_2}$ be the corresponding element associated with a second user, then

$$g_i = g_{i_1} o g_{i_2}$$

is associated with the composition of the two data streams. Since every element of a group has an inverse both parties can recover their data, user 1 by:

$$g^{-1,i}{}_1 o g_i$$

and user 2 by:

$$g_i o g^{-1,i_2} .$$

By construction the modulation group associated with a modulation that has n points is a subgroup of the permutation group of $n$ elements. In the case of mPSK, the elements of the abstract group are

$$S_m = \{1, g, g^2, \ldots, g^{m-1}\}.$$

This group is cyclic and thus abelian, i.e. elements can be commuted. In the case of mQAM, one possible group is composed of two cyclic subgroups. This group is also abelian. With $m = \mu^2$, the elements are:

$$\left\{ 1, g_x, g_y, g_x \circ g_y, g_x^2, g_x^{\mu-1} g_y^{\mu-1} \right\}$$

In both cases described above, the signals are obtained from linear representations of the groups.

Alternatively, one might also consider mQAM as originating from the cyclic group $S_m$, and consider non-linear mappings. This will not be further discussed, however.

### 3 Signal Level Network Coding

The description of signals by group elements and the linear representation of these groups in a two dimensional vector space $\mathbf{C}$ are the basis for signal level network coding. Let $T_g$ be a linear transformation representing the group element $g$, then the set of these transformation is a linear representation of the group if

$$T_1 = 1, \; T_{g1 o g2} = T_{g1} T_{g2}.$$

The composed data stream can thus be constructed by multiplying the transformations associated with the signals received from user 1 and 2. Since the resulting transformation is again representing a group element, i.e., a signal, it maps signals into signals. If in the original signal streams all symbols were allowed at all times, i.e., were not restricted by coding for spectral shaping or peak-to-average reduction, the resulting signal fulfils the same restrictions on transmit power and spectrum as the original signal.

The linear transformations are not themselves the signals. They are rather applied to some initial vector $s_0$ for generating a signal $s_g$:

$$s_g = T_g s_0.$$

This initial vector is typically referenced relative to the transmitter, and thus depends on the transmitter. Furthermore, the channel may also cause transformations of the signal, e.g. fades, frequency shifts, and phase rotations. In order to describe these influences, the modulation group needs to be embedded into a more general transformation group. Fades are described by a scaling of the amplitude $A_\lambda s = \lambda s$, and frequency shifts and phase rotations by rotations $R_\phi s = e^{j\phi} s$. In the case of an mPSK, the modulation group is a subgroup of the latter group. Arbitrary initial conditions for user i expressed in terms of a virtual time and frequency reference at the satellite are then given by:

$$S_{0,i} = R_{\phi + \omega_{D,i}t} S_0.$$

Assume $s_0 = 1 + 0j$, then $s_{0,i} = R_{\phi i + \omega_{D|t}} s_0$. Since the extended group is abelian, i.e., all transformations can be interchanged, including the scaling transformations, the product of the two signals received at the satellite can be expressed in the form:

$$
\begin{aligned}
S = r_1 r_2 \\
= T_{g1} A_{\lambda 1} R_{\phi 1 + \omega_{D,1}t} T_{g2} A_{\lambda 2} R_{\phi 2 + \omega_{D,2}t} \\
= T_{g1 o g2} A_{\lambda \cdot \lambda 2} R_{\phi 1 + \phi 2 + (\omega_{D,1} + \omega_{D,1})t} \\
= T_{g1 o g2} S'_0.
\end{aligned}
$$

$$(1)$$

The receiver has thus to estimate the composite reference signal $s'_0$ used by the satellite to represent the group element $g_1 o g_2$ and can then reconstruct $g_i$ from knowing the other element. The estimation of $s'_0$ might be aided by training sequences or appropriate coding of the data streams, e.g., by coding the information in a manner that makes it invariant with respect to arbitrary rotations of the complete data stream. Also note that any mPSK modulation is invariant with respect to amplitude scaling. The above scheme can equally be applied if two different mPSK modulations are used, e.g., QPSK and 8-PSK.

The above discussion, has so far assumed that the two data streams are synchronous at the symbol level. Although, one might generalize the scheme to the case that this is not met, the assumption simplifies things. There are two ways for achieving this, the first one is that both transmitters precompensate their propagation delay, Doppler shift and oscillator offset by using GNSS and the precise knowledge of the satellite's orbit and their own orbit. Another possibility is to use the own signal as provided by the satellite to correct for these quantities. Since both users will do the same, they should correct by half the error at each step in order to prevent instabilities. In practice, one might use a combination of both. This control loop is uncritical up to data rates in the order of 10-100 Mbps. The same method could in principle also be used to control the phase of the signal in such a manner that $\varphi_i$ stays small, which corresponds to a PLL with a reference point at the receiver. Currently, the accuracy of GNSS systems is borderline, at best supporting such an approach for fixed users.

The next level of complexity is achieved by considering multi-level mPSK. In the case of two levels, this would mean an arrangement of signal points on an inner and an outer circle. This extends the modulation group by an additional operation, the exchange of the inner and outer circle. At the signal level, this could be implemented by scaling and a modulo operation. The scaling by $\kappa$ maps the inner circle, which is assumed to have amplitude 1, to the outer circle, which thus has amplitude $\kappa$. The scaling and modulo operation by $\kappa^2$-1 maps the outer circle to the inner one. This approach can also me extended to $n$ levels, In this case, the cyclic groups is extended to include the radii

$$1, \kappa, \kappa_2, \ldots, \kappa^{n-1},$$

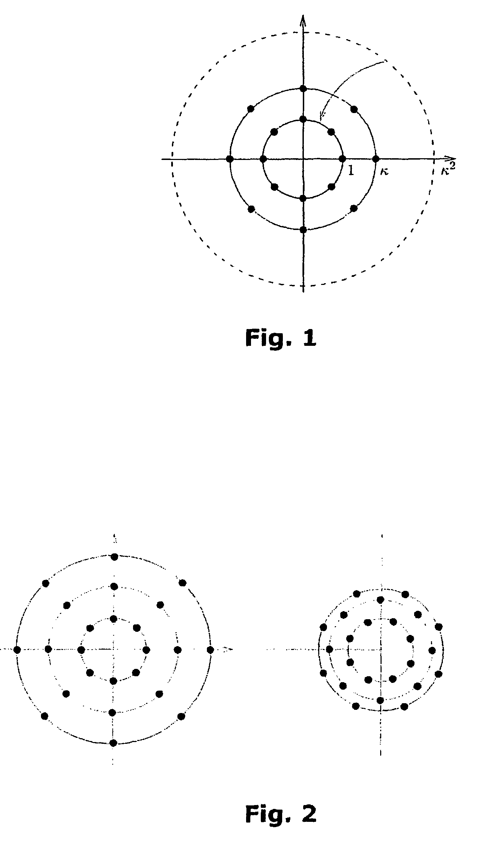

and the generator of the group is multiplication by $\kappa$ modulo $\kappa^n$-1. The spacing of the circles scales linearly in this case, which is not a typical choice for modulations with $n>2$, since it costs transmit power, without an overall benefit in Euclidean distance between the constellation points. The main benefit is that this group is close to the transformations induced by the channel, the only difference being that the channel does not perform modulo operations. It can, however, scale the signal in both ways, depending on whether the signal enters or exits a fade. This is mainly due to the inherent latency of the automatic gain control. In order to respect the neighbourhood relations, a receiver must interpret the signal in the modulo $\kappa^n$-1 context, see Fig.1. The same product combination of the signals at the satellite can be used as described by Equation (1). Alternatively, one might want to use the additive group modulo $n$ in the radial dimension. This, however requires that the satellite performs a more complex operation, including a polar decomposition of the signals. In this case, the circles have equal distances, which is more favourable from a power and spectral efficiency perspective but still not optimum. Unfortunately, it seems difficult to take advantage of the different Euclidean distances through coding, since the symbols of one user are re-mapped by the symbols of the other user in an unpredictable manner. Therefore the Euclidean distance should be kept as close as possible. In a first step shown in Fig.2, the sub-constellations on successive circles are rotated with respect to each other and the radius minimized. The constellation shown is optimum for a three-level 8PSK. In this approach, the angular and radial components become coupled. Note that this representation of the group is no more linear. The scaling and the rotation depend on the circle considered. The satellite, however, only needs to perform a polar decomposition of the signal. This seems to be the most promising efficient modulation in the present context.

The consideration of QAM type modulations involves the highest level of complexity. In the case of a quadratic signal constellation the group has two cyclic subgroups, i.e. translations in the in-phase and quadrature directions. The signal space becomes a torus. The main inconvenience, however, is that the group of transformation that describes the initial conditions as well as the channel influence and the modulation group do no more commute. As a consequence, this scheme seems to need an estimation of those quantities on the satellite, in order to align the in-phase and quadrature component of the two signals at least modulo $\pi/2$. This implies the highest complexity, but is still feasible by blind techniques. They do not require the recovery of the full information.

Finally, one should mention that all schemes described above allow for soft-decision decoding.

### 4 Conclusion

The present paper describes an extension of the combination needed in network coding to signal space. It can be performed without decoding or other interpretation of the signals, at the location at which the combination of the data streams is performed, e.g. the satellite. The choice of suitable modulation classes depends on the description of initial conditions of the users and the signal distortions caused by the transmission channel. Optimized multi-level PSK modulations seem to be the best candidates.

### References

[1] R.W. Yeung, S.-Y. R. Li, N. Cai, Z. Zhang, Network Coding Theory, now Publisher Inc., Boston-Delft, 2006.

[2] Y. Wu, P.A. Chou, S.-Y. Kung, "Information Exchnage in Wireles Networks with Network Coding and Physical-Layer Broadcast," Proc. Conf. on Inform. Sc. and Systems, March 17-18, 2005.

**Claims**

1. Method for data communicating between several users via a satellite, wherein

   - the users are located within the same beam of the satellite,
   - at least two users send modulated and coded data streams to the satellite for further transmitting to the respective other user,
   - in the satellite the data streams without demodulation and decoding are combined as a combination signal using a mathematical group operation,
   - the satellite transmits the combination signal via its beam to the users and
   - each user extracts from the received combination signal the data streams of the respective other user.

2. Method according to claim 1, wherein the group operation comprises a multiplication of the modulated and coded data streams.

3. Method according to claim 2, wherein the combination signal includes a reference signal which allows estimating fades, frequency shifts and phase rotations.

4. Method according to claim 1, wherein the group operation consists of a scaling operation followed by a modulo operation.

**Patentansprüche**

1. Verfahren zur Datenkommunikation zwischen mehreren Benutzern über einen Satelliten, bei welchem

   - sich die Benutzer in dem selben Strahl des Satelliten befinden,
   - mindestens zwei Benutzer modulierte und codierte Datenströme an den Satelliten zur Weiterübertragung an den jeweils anderen Benutzer senden,
   - in dem Satelliten die Datenströme ohne Demodulation und ohne Decodierung unter Verwendung einer mathematischen Gruppenoperation zu einem Kombinationssignal zusammengefasst werden,
   - der Satellit das Kombinationssignal über seinen Strahl an die Benutzer sendet, und
   - jeder Benutzer aus dem empfangenen Kombinationssignal die Datenströme des jeweils anderen Benutzers extrahiert.

2. Verfahren nach Anspruch 1, bei welchem die Gruppenoperation das Multiplizieren der modulierten und codierten Datenströme beinhaltet.

3. Verfahren nach Anspruch 2, bei welchem das Kombinationssignal ein Referenzsignal aufweist, das das Schätzen von Fading, Frequenzverschiebungen und Phasendrehungen ermöglicht.

4. Verfahren nach Anspruch 1, bei welchem die Gruppenoperation aus einer Skalierungsoperation gefolgt von einer Modulo-Operation besteht.

**Revendications**

1. Procédé de communication de données entre plusieurs utilisateurs via un satellite, dans lequel

   - les utilisateurs sont situés dans le même faisceau dudit satellite,
   - au moins deux utilisateurs transmettent des flux de données modulés et encodés audit satellite pour la transmission ultérieure à l'autre utilisateur respectif,
   - au sein du satellite, les flux de données sont combinés en un signal combiné sans démodulation et décodage, ladite combinaison étant effectuée à l'aide d'une opération arithmétique de groupe,
   - ledit satellite transmet ledit signal combiné auxdits utilisateurs via son faisceau, et
   - chaque utilisateur extrait du signal combiné reçu les flux de données de l'autre utilisateur respectif.

2. Procédé selon la revendication 1, dans lequel ladite opération de groupe comprend la multiplication des flux de données modulés et encodés.

3.  Procédé selon la revendication 2, dans lequel le signal combiné comprend un signal de référence permettant d'estimer des pertes, des décalages de fréquence et des rotations de phase.

4.  Procédé selon la revendication 1, dans lequel l'opération de groupe comprend une opération d'échelonnement suivie d'une opération de modulo.

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6397039 B

**Non-patent literature cited in the description**

- **R.W. Yeung ; S.-Y. R. Li ; N. Cai ; Z. Zhang.** Network Coding Theory. now Publisher Inc,

- **Y. Wu ; P.A. Chou ; S.-Y. Kung.** Information Exchnage in Wireles Networks with Network Coding and Physical-Layer Broadcast. *Proc. Conf. on Inform. Sc. and Systems,* 17 March 2005